(19) Europäisches Patentamt

European Patent Office

Office européen des brevets

(11) **EP 1 309 659 B1**

(12) **EUROPEAN PATENT SPECIFICATION**

(45) Date of publication and mention
of the grant of the patent:
**08.03.2006 Bulletin 2006/10**

(51) Int Cl.:
***C08L 59/00*** (2006.01)   ***C08K 13/02*** (2006.01)
***C08K 9/04*** (2006.01)   ***C08K 5/09*** (2006.01)
***C08K 3/26*** (2006.01)

(21) Application number: **00954115.2**

(22) Date of filing: **17.08.2000**

(86) International application number:
**PCT/US2000/022531**

(87) International publication number:
**WO 2002/014429 (21.02.2002 Gazette 2002/08)**

(54) **TOUGHENED, HIGH-MODULUS POLYACETALS**

VERSTÄRKTE POLYACETALE MIT HOHEM MODUL

POLYACETALS RENFORCES ET A MODULE ELEVE

(84) Designated Contracting States:
**DE FR GB IT**

(43) Date of publication of application:
**14.05.2003 Bulletin 2003/20**

(73) Proprietor: **E.I. DUPONT DE NEMOURS AND
COMPANY
Wilmington,
Delaware 19898 (US)**

(72) Inventors:
• **WEINBERG, Mark, Gary
Wilmington, DE 19810 (US)**

• **FLEXMAN, Edmund, Arthur
Wilmington, DE 19810 (US)**

(74) Representative: **Morf, Jan Stefan
Patentanwälte Abitz und Partner
Postfach 86 01 09
81628 München (DE)**

(56) References cited:
**EP-A- 0 340 931**   **GB-A- 1 123 358**
**GB-A- 1 297 548**   **JP-A- 1 170 641**
**US-A- 4 456 710**

## Description

FIELD OF THE INVENTION

This invention relates to a polyacetal composition for molded articles exhibiting desirable combinations of stiffness and impact resistance. More particularly, this invention relates to a composition comprising a polyacetal and a mineral filler.

TECHNICAL BACKGROUND OF THE INVENTION

Polyacetals are well known in the art, and are in widespread commercial use, principally in the form of polyoxymethylene homopolymer and copolymers. Polyoxymethylene homopolymer is generally formed by polymerizing formaldehyde or trioxane, the cyclic ether form of formaldehyde. Copolymers are generally formed by combining formaldehyde with various cyclic ethers such as ethylene oxide or 1,3-dioxolane to form a polymer chain having two or more methylene groups directly adjacent to one another, thereby improving the thermal stability over that of the hompolymer. See for example U.S. Patent 2,768,994, U.S. Patent 3,027,352.

Polyacetal homopolymers and copolymers have been modified in various ways in order to broaden the spectrum of available properties. Representative are the modifications to Delrin® homopolymer, available from DuPont, as shown in Table 1. Table 1 shows commercially available grades of polyacetal homopolymer which have been modified in order to provide combinations of stiffness and toughness not available from unmodified polyacetal homopolymer. Stiffness is indicated by the flexural modulus determined according to ASTM D790, and toughness is indicated by notched Izod impact resistance determined according to ASTM D256.

| Table 1 Properties of Commercial Polyacetal Homopolymer Resins | | | |
|---|---|---|---|
| Delrin® Resin | Description | Flexural Modulus (ASTM D790) MPa (Ksi) | Izod Impact Resistance (ASTM D256) J/m(ft-lbs/in) |
| 500 | unmodified | 3110(450) | 76(1.4) |
| 500T | toughened | 2250(330) | 128(2.4) |
| 100ST | toughened | 1130(160) | 840(16) |
| 525GR | glass reinforced | 8000(1160) | 96(1.8) |

With continuing reference to Table 1, blending short glass fibers in a polyacetal resin composition (e.g., Delrin® 525GR) provides about 130% improvement in toughness and about a 300% increase in stiffness over the Delrin® 500. However, glass fibers significantly reduce the moldability of the resulting resin and may lead to property anisotropy, uneven shrinkage, and part warpage. Mineral fillers provide similar improvements in stiffness to the polyacetal resin but usually with a reduction in toughness, even though processibility and product isotropy are improved over a glass containing composition.

It is known in the art to incorporate fatty acids, particularly stearic acid, into mineral filled polyolefin compositions. For example, U.S. Patent No. 4,795,768 to Ancker et al. discloses a composition consisting of high density polyethylene filled with 50 wt-% of a 3.5 $\mu$m $CaCO_3$ pre-treated with 2% by weight of isostearic acid. Izod impact was decreased by about 8% with respect to the unfilled polymer while flexural modulus was increased by about 150%.

Orange, 10th Int. Conf Deformation, Yield, and Fracture of Polymers, Inst of Mat, pp. 502ff, (1997) discloses filled polypropylene compositions containing 10% by volume of a 0.1 $\mu$m and 2 $\mu$m $CaCO_3$ both stearic acid treated and untreated. The compositions containing the stearic acid treated fillers exhibited fracture toughness higher than the unfilled polymer and somewhat higher stiffness. The composition containing the 2 $\mu$m untreated filler was similar to the treated composition, but that containing the 0.1 $\mu$m untreated filler exhibited a 50% reduction in fracture toughness and about a 45% increase in stiffness.

Suetsugu, The Polymer Processing Society,(1990), discloses an increase of notched Izod impact resistance of 230% in a high molecular weight polypropylene composition containing 30% by weight of stearic acid treated 4.3 $\mu$m $CaCO_3$.

The differences between saturated and unsaturated fatty acids in their interaction with mineral particles is disclosed in Ottewill et al., *J. Oil Colour Chemists Assn,* 50:844 (197).

Flexman in Toughened Plastics I, C. Keith Riew and Anthony J. Kinloch, editors, American Chemical Society, Washington, 1993, shows that the fracture mechanics of polyacetals differs considerably from that of polyamides.

SUMMARY OF THE INVENTION

In one aspect of the present invention, there is provided a composition comprising a polyoxymethylene polymer comprising up to 10 mol-% of repeat units comprising oxyalkylene radicals having adjacent methylene units, 1%-30% by volume of a mineral filler having an aspect ratio (the average ratio of the largest to the smallest dimension of the filler particle) of 5 or less, the filler having an average equivalent spherical diameter in the range of 0.1 to less than 3.5 micrometers, and a saturated organic acid, salt thereof, or a mixture thereof, at a concentration of at least 0.5% by weight of the mineral filler wherein the saturated organic acid, salt thereof, or mixture thereof comprises one or more saturated fatty acids, salts thereof, or a mixture thereof.

In another aspect, the invention relates to a process for forming a composition, comprising the steps of combining a polyoxymethylene polymer comprising up to 10 mol-% of repeat units comprising oxyalkylene radicals having adjacent methylene units, with a mineral filler having an aspect ratio of less than 5, the mineral filler having an average equivalent spherical diameter in the range of 0.1 to 3.5 micrometers, and a saturated organic acid, salt thereof, or a mixture thereof, at a concentration of at least 0.5% by weight of the mineral filler, wherein the saturated organic acid, salt thereof, or mixture thereof comprises one or more saturated fatty acids, salts thereof, or a mixture thereof, the mineral filler and the polyacetal being combined at a weight ratio given by the formula:

$$Wf/Wp = [VF/(1-VF)] \cdot Df/Dp$$

where Wf is the weight of the filler, Wp is the weight of the polymer, VF is the desired volume fraction of filler, in the range of 0.01-0.3, Df is the density of the filler, and Dp is the density of the polymer.

heating the combination to a temperature above the melting point of the polyacetal to form a molten composition;
mixing the molten composition to provide a homogenous melt; and,
cooling the molten composition.

DETAILED DESCRIPTION

This invention, through the incorporation of saturated organic acids, salts thereof, or mixtures thereof, into compositions comprising polyacetals and mineral fillers, results in improvements in properties over the unfilled polymer and filled polymers containing impact modifiers of the art. This invention increases stiffness at constant or increased toughness over the unmodified resin.

Polyacetal homopolymers, and copolymers formed from two or more aldehyde or cyclic ether monomers are suitable for the practice of the present invention including those which have been nucleated, pigmented, and otherwise modified according to practices common in the art The polyacetals of this invention may include small amounts of common additives, typically less than 5% by weight, which may affect toughness or stiffness, including: stabilizers, antioxidants, mold release agents, lubricants, glass fibers, carbon black, plasticizers, pigments, and other well-known additives commonly employed in the art.

Polyacetals preferred for the practice of the present invention include polyoxymethylene homopolymer, or a copolymer thereof comprising up to 10 mol-% of alkylene radical repeat units having adjacent methylene groups. Preferred copolymers include those formed by copolymerizing according to the teachings of the art formaldehyde or trioxane with cyclic ethers having 2-12 carbon atoms, preferably 1,3-dioxolane. Preferably said alkylene radical repeat units represent no more than 5 mol-%, most preferably not more than 2 mol-%, of the total polymer. Preferred polyoxymethylene copolymers are dipolymers of formaldehyde and ethylene oxide where the quantity of ethylene oxide incorporated into the polymer is about 2 weight percent. The preferred polyoxymethylene homo- and copolymers for use in the compositions of the present invention are those with a number average molecular weight of about 20,000 to 100,000, more preferably 20,000 to 80,000 and most preferably 25,000 to 70,000 and those whose terminal hydroxyl groups have been end-capped by a chemical reaction to form ester or ether groups, preferably acetate or methoxy groups, respectively according to the teachings in U.S. Patent 2,768,994, *op.cit.*

Suitable inorganic fillers for use in this invention are those that do not have significant off-gassing or decompose themselves or cause polyacetal to decompose at typical polyacetal processing conditions, including the time-temperature combinations of injection molding. These include, but are not limited to: calcium carbonate; oxides such as alumina, silica, and titanium dioxide; sulfates such as barium sulfate; titanates; kaolin clay and other silicates; magnesium hydroxide, and carbon black. In the present invention, an aspect ratio (the average ratio of the largest to the smallest dimension of the filler particle) of less than about 5 avoids stress concentrations and part anisotropies. The preferred fillers are calcium carbonate and titanium dioxide.

The size of the filler particles is stated as the equivalent spherical diameter. The equivalent spherical diameter is the diameter of a sphere having the same volume as the filler particle and may be determined by use of a Sedigraph 5100 (Micrometrics Instrument Corporation, Norcross, GA). The Sedigraph 5100 determines particle size by the sedimentation method, measuring the gravity-induced settling rates of different size particles in a liquid with known properties. The rate at which particles fall through the liquid is described by Stokes' Law. The largest particles fall fastest, while the smallest particles fall slowest. The sedimentation rate is measured using a finely collimated beam of low energy X-rays which pass through the sample cell to a detector. The distribution of particle mass at various points in the cell affects the number of X-ray pulses reaching the detector. This X-ray pulse count is used to derive the particle size distribution expressed as the percent mass at given particle diameters. Since particles rarely exhibit uniform shapes, each particle size is reported as an "Equivalent Spherical Diameter", the diameter of a sphere of the same material with the same speed of sedimentation.

Suitable particles have equivalent spherical diameters in the range of 0.1 to less than 3.5 micrometers, most typically 0.5-2 micrometers.

The size of the filler particles can affect the toughness and/or stiffness properties of the composition of the invention. Particles that are either too large or too small do not produce the benefits of the present invention. A suitable filler particle has a relatively narrow size distribution with particular emphasis on having a minimum number of particles much larger than the mean particle size.

It is believed that the improvements provided by the invention are related to achieving a distance distribution with a mean value in the range of 0.1 $\mu$m - 1.0 $\mu$m; controlling of the interface between resin and filler, and maintaining continuity of the polymer phase. The nearest neighbor interparticle separation is controlled by the combination of filler size, filler loading, and adequate deagglomeration and dispersion of the filler. The polymer/filler interface is controlled by the use of sufficient but not excessive amounts of the saturated organic acids and/or salts of the invention. The continuity of the polymer phase is determined by the volume loading of filler.

The relationship among mean nearest neighbor interparticle distance (IPD), filler size, d, and required filler loading, Ø (as a volume fraction), is given approximately by the equation

$$IPD = d \cdot [ (\pi/6\o)^{1/3} - 1].$$

For example, it was found thereby that when the interparticle separation is taken to be 0.3 $\mu$m the maximum particle size cannot exceed 20 $\mu$m at volume fractions less than 0.50. When the particles occupy about 50% by volume or more, however, the continuity of the polymer matrix is jeopardized. At particle sizes at or below about 0.1 micrometer, the required interparticle separation range is readily achieved at volume loadings well-below 50% provided that the particles can be deagglomerated and homogeneously dispersed which can be very difficult to achieve because of the very high surface forces binding the fine particles together. Also, it is believed that the toughening effect observed in the practice of this invention depends upon the efficient debonding of the filler particle from the resin during impact deformation. The ability to debond decreases with particle size. It is therefore believed that at particle sizes much below 0.1 micrometers, the conditions are no longer favorable for debonding, making these particles sizes unsuitable.

It is believed that the polymer/filler interfacial forces are mediated by one or more saturated organic acids or salts thereof. The requisite amount depends upon the interfacial area — e.g., the greater the interfacial area, the more organic acid or acid salt is required. The actual amount however will depend upon the size and shape of the particles and the volume loading of the particles.

It is found that the concentration of filler varies with filler size, increasing with increasing size in the suitable range. Thus, if the filler size is at the high end of the range, a higher concentration of filler is needed than if the filler size is at the lower end of the range. The suitable range is 1 to 30 vol. %, preferably 5 to 20 vol %, and most preferably 10 to 20 vol %. One of skill in the art, will recognize, however, that at 1% filler loadings, polyacetal compositions will exhibit minimal improvements in stiffness or impact resistance.

At filler loadings greater than approximately 30 vol %, it becomes increasingly difficult to achieve a homogeneous distribution of non-agglomerated filler within the polymer matrix using ordinary methods of melt mixing.

Suitable saturated organic acids are fatty acids. Preferred organic acids include stearic acid. Inorganic salts of the suitable acids are equally suitable, including zinc stearate and the like. It is understood by one of skill in the art that an organic acid in combination with a mineral at elevated temperatures may form a salt therewith so that the acid added to the mixture in the process of the invention may or may not be present in the final product thereof. The organic acids or salts thereof are present at a concentration of at least 0.5% by weight on the weight of the filler. While there is no particular upper limit to concentration of organic acid, in one embodiment of the invention the concentration of organic acid or salt thereof is in the range of 0.5-to 4% by weight on the weight of the filler.

It is believed that a useful concentration of acid or acid salt in the composition of the invention corresponds to that at which the acid or salt forms a molecular monolayer on substantially all of the mineral filler surface. Any amount less than that will exhibit less than the optimal combination of properties while any amount more than that serves no function except to dilute the amount of polymer in the composition. The addition of about 2% by weight of stearic acid on the weight of the 0.7 $\mu$m $CaCO_3$ is optimal.

The composition of the invention is formed by coating a filler with a saturated organic acid or salt thereof, mixing the coated filler into the polyacetal, and pelletizing the product. The saturated organic acids or salts may be, but are not required to be, applied to the filler in a separate coating step prior to processing with polymer. In a method, known in the art, for applying organic acid or salt coatings to mineral fillers, the acid or salt is dissolved in an appropriate solvent and mixed with the filler until it is all coated. The thus coated filler can then be separated from the solution and the remaining solvent removed by drying. In another method, the acid or acid salt, the filler and the polymer are combined at once. Mixing may further be achieved by dispersing the filler into a dispersion or solution of the polymer and the organic acid or salt thereof, followed by drying; Mixing may also be achieved in the melt, either in a batch mixer or a continuous extruder.

Preferably, the ingredients are dry-blended by tumbling followed by feeding to an extruder or batch mixer according to well-established methods of the art. Alternatively, the ingredients can be separately and continuously fed to one or more extruder zones by, for example, the use of weight loss feeders, all of the mixing being performed in the extruder; or the material may be added at once or in stages to a batch type melt blender and the composition formed therein.

In one embodiment of the invention, the ingredients are processed in a twin-screw co-rotating extruder to ensure good mixing. The extrudate is pelletized and subsequently molded into parts by injection molding. The pellets can also be compression molded or a molded or extruded sheet can be thermoformed into a complex shape. Other means known in the art may also be employed to form shaped articles of the composition of the invention.

It is convenient to combine the polyacetal polymer and filler according to a weight ratio determined by the respective densities thereof and the goal volume fraction of filler. The weight ratio is determined from the equation

$$Wf/Wp = [VF/(1-VF)] \cdot Df/Dp$$

where Wf is the weight of the filler, Wp is the weight of the polymer, VF is the desired volume fraction of filler, in the range of 0.01-0.3 as herein described, Df is the density of the filler, and Dp is the density of the polymer. The density, D, is not the bulk density but the actual density of the material.

The present invention is further illustrated by the following specific embodiments which are not intended to be limiting thereon.

### EXAMPLES

### EXAMPLES 1-3 AND COMPARATIVE EXAMPLE A-J

In the following examples, Celcon® M270 polyacetal copolymer (Hoechst-Celanese) was melt blended with the types and concentrations of $CaCO_3$ shown in Table 2. All the fillers were obtained from Specialty Minerals Inc. The three stearic acid treated fillers were similarly surface treated. Melt blending was accomplished in a 28 mm co-rotating twin screw extruder (Werner & Pfleiderer, Ramsey, NJ) at barrel temperatures of 220°C. The extrudate was pelletized and the pellets were dried overnight at 60°C. The dried pellets were molded into test bars in a 6 oz., 150 ton Van Dom injection molding machine equipped with a water-heated mold. The molding machine barrel temperatures were set at 220°C and the mold temperature was set at 60°C.

In Comparative Example A, Celcon® M270 was extruded and injection molded without filler.

All compositions were molded into dog-bone shaped tensile bars for determination of Young's modulus according to ASTM D638-95 (Type I specimen, 2" long gauge length; 1/2" wide; 1/8" thick) and flexural test bars (5" long, 1/2" wide, 1/8" thick) suitable for flexural testing according to ASTM D790 and for use in the notched Izod Impact Resistance test, ASTM D256. For Izod testing, the injection molded flexural test bars were divided into two 2-1/2" long pieces, one close to the gate and referred to as the "near end" and the other far from the gate and referred to as the "far end". The results are shown in Table 2.

The data of Table 2 shows that both stiffness and impact resistance are simultaneously enhanced with filler particles within a range of 0.1 to less than 3.5 microns. Table 2 shows that at filler sizes below this range, of 0.07 $\mu$m, and at 3.5 $\mu$m the Izod values did not increase. In addition, the Izod values did not increase with the uncoated Albafil®

Table 2

| Filler in Celcon® M270 | | Stearic Acid Coated? | Av Particle Size (microns) | Vol % | Izod Impact (J/m) Near End | Izod Impact (J/m) Far End | Young's Mod (MPa) | Flexural Mod (MPa) |
|---|---|---|---|---|---|---|---|---|
| Comp. Ex. A | | | | 0 | 52.3 | 52.3 | 2852 | 2770 |
| Comp. Ex. B | Ultra-Pflex® | Yes | 0.07 | 5 | 46.5 | 52.3 | | |
| Comp. Ex. C | Ultra-Pflex® | Yes | 0.07 | 10 | 32.0 | 32.0 | | |
| Comp. Ex. D | Ultra-Pflex® | Yes | 0.07 | 20 | 32.0 | 32.0 | | |
| Example 1 | Super-Pflex® 200 | Yes | 0.7 | 5 | 52.3 | 50.7 | 3094 | 3094 |
| Example 2 | Super-Pflex® 200 | Yes | 0.7 | 10 | 56.6 | 53.9 | 3734 | 3280 |
| Example 3 | Super-Pflex® 200 | Yes | 0.7 | 20 | 50.7 | 50.7 | 4368 | 3996 |
| Comp. Ex. E | Albafil | No | 0.7 | 5 | 46.5 | 50.7 | | |
| Comp. Ex. F | Albafil | No | 0.7 | 10 | 46.5 | 46.5 | | |
| Comp. Ex. G | Hi-Pflex® 100 | Yes | 3.5 | 5 | 49.7 | 46.5 | | |
| Comp. Ex. H | Hi-Pflex® 100 | Yes | 3.5 | 10 | 48.1 | 49.7 | | |
| Comp. Ex. I | Hi-Pflex® 100 | Yes | 3.5 | 20 | 33.6 | 33.6 | | |
| Comp. Ex. J | Hi-Pflex® 100 | Yes | 3.5 | 25 | 32.0 | 32.0 | | |

EXAMPLES 4,5 AND COMPARATIVE EXAMPLES K,L

Delrin® 500P polyoxymethylene homopolymer was processed in the manner of Examples 1-3 except that the extruder was a 30 mm twin screw extruder. Flexural modulus was determined according to ASTM D790. Only the flexural bar centers were used for the Izod test. Results are shown in Table 3.

Table 3: Polyoxymethylene homopolymer

| Example | Filler | Stearic Acid Coated | Weight % | Flexural Modulus (MPa) | Izod, (J/m) |
|---|---|---|---|---|---|
| Comparative Example K | | | | 2917 | 80.1 |
| Example4 | Super-Pflex® 200 | Yes | 10 | 3028 | 85.4 |
| Comparative Example L | | | | 3117 | 69.4 |
| Example 5 | Super-Pflex® 200 | Yes | 10 | 3166 | 85.4 |

EXAMPLES 6-9 AND COMPARATIVE EXAMPLE M,N

The methods of Example 4 were employed except that the resin was a commercially available copolymer of polyoxymethylene incorporating 1 mol-% of ethylene oxide repeat units. The resin was characterized by a number average molecular weight of 28,300 Da and a weight average molecular weight of 99,200 Da, as determined by gel permeation chromatography following the general procedures outlined in ASTM D5296-92 employing hexafluoroisopropanol as the solvent. Results are shown in Table 4.

Table 4. Polyacetal Copolymer

| Example | Filler | Stearic Acid Coated | Weight % | Flexural Modulus MPa | Izod, J/m |
|---|---|---|---|---|---|
| Comparative Example M | | | | 2352 | 69.4 |
| Example 6 | Super-Pflex® 200 | Yes | 10 | 2621 | 74.8 |
| Example 7 | Super-Pflex® 200 | Yes | 20 | 2828 | 80.1 |
| Example 8 | Super-Pflex® 200 | Yes | 30 | 3055 | 69.4 |
| Example 9 | Super-Pflex® 200 | Yes | 40 | 3779 | 53.4 |
| Comparative Example N | Super-Pflex® 200 | Yes | 50 | 4566 | 42.7 |

**Claims**

1.  A composition comprising a polyacetal polymer comprising polyoxymethylene and up to 10 mol-% of repeat units comprising oxyalkylene radicals having adjacent methylene units, 1%-30% by volume of a mineral filler having an aspect ratio of 5 or less, the filler having an average equivalent spherical diameter in the range of 0.1 to less than 3.5 micrometers, and a saturated organic acid, salt thereof, or a mixture thereof, at a concentration of at least 0.5% byweight of the mineral filler, wherein the saturated organic acid, salt thereof, or mixture thereof comprises one or more saturated fatty acids, salts thereof, or a mixture thereof.

2.  The composition according to Claim 1 wherein the composition comprises 5-20% by volume of a mineral filler.

3.  The composition according to Claim 1 wherein the composition comprises 10-20% by volume of a mineral filler.

4.  The composition of according to Claim 1 wherein the average equivalent spherical diameter is 0.5 to 2 micrometers.

5.  The composition according to Claim 1 wherein the concentration of saturated organic acid, salt thereof, or mixture thereof is in the range of 0.5-4%.

6.  The composition according to Claim 1 wherein the saturated fatty acid is stearic acid.

7. The composition according to Claim 4 wherein the saturated organic acid is stearic acid at a concentration of about 2% by weight on the weight of the filler.

8. The composition according to Claim 1 wherein the inorganic filler is calcium carbonate.

9. The composition of Claim 1 wherein the repeat units comprising oxyalkylene radicals having adjacent methylene units are ethylene oxide repeat units.

10. The composition of Claim 1 wherein the polyacetal polymer is a polyoxymethylene homopolymer.

11. A shaped article comprising the composition of Claim 1.

12. A process for forming a composition, comprising the steps of combining a polyacetal polymer comprising polyoxymethylene and up to 10 mol-% of repeat units comprising oxyalkylene radicals having adjacent methylene units, with a mineral filler having an aspect ratio of less than 5, the mineral filler having an average equivalent spherical diameter in the range of 0.1 to 3.5 micrometers, and a saturated organic acid, salt thereof, or a mixture thereof, at a concentration of at least about 0.5% by weight of the mineral filler, wherein the saturated organic acid, salt thereof, or mixture thereof comprises saturated fatty acids, salts meteor or a mixture thereof and the mineral filler and the polyacetal being combined at a weight ratio given by the formula:

$$Wf/Wp = [VF/(1-VF)] \bullet Df/Dp$$

where Wf is the weight of the filler, Wp is the weight of the polymer, VF is the desired volume fraction of filler, in the range of 0.01-0.3, Df is the density of the filler, and Dp is the density of the polymer;
heating the combination to a temperature above the melting point of the polyacetal to form a molten composition;
mixing the molten composition to provide a homogenous melt; and,
cooling the motten composition.

13. The process of Claim 12 wherein VF is in the range of 0.10-0.20.

14. The process of Claim 12 wherein the average equivalent spherical diameter is 0.5-2 micrometers.

15. The process of Claim 14 wherein the saturated organic acid is stearic acid at a concentration of about 2% by weight on the weight of the filler.

16. The process of Claim 12 wherein the saturated fatty acid is stearic acid.

17. The process of Claim 12 wherein the inorganic filter is calcium carbonate.

18. The process of Claim 12 wherein the repeat units comprising oxyalkylene radicals having adjacent methylene units are ethylene oxide units.

19. The process of Claim 12 wherein the polyacetal polymer is a polyoxymethylene homopolymer.


**Patentansprüche**

1. Zusammensetzung, aufweisend ein Polyacetal-Polymer, das Polyoxymethylen und bis zu 10 Mol.% repetierende Einheiten aufweist, die Oxyalkylen-Reste aufweisen mit nachbarständigen Methylen-Einheiten, 1% bis 30 Volumenprozent eines mineralischen Füllstoffes mit einem Höhe-Breite-Verhältnis von 5 oder weniger, wobei der Füllstoff einen mittleren äquivalenten Kugeldurchmesser im Bereich von 0,1 bis weniger als 3,5 Mikrometer hat, sowie eine gesättigte organische Säure, ein Salz davon oder eine Mischung davon bei einer Konzentration von mindestens 0,5 Gew.% des mineralischen Füllstoffes, wobei die gesättigte organische Säure, das Salz davon oder eine Mischung davon ein oder mehrere gesättigte Fettsäuren, Salze davon oder eine Mischung davon aufweist.

2. Zusammensetzung nach Anspruch 1, wobei die Zusammensetzung 5% bis 20 Volumenprozent eines mineralischen Füllstoffes aufweist.

3. Zusammensetzung nach Anspruch 1, wobei die Zusammensetzung 10% bis 20 Volumenprozent eines mineralischen Füllstoffes aufweist.

4. Zusammensetzung nach Anspruch 1, wobei der mittlere äquivalente Kugeldurchmesser 0,5 bis 2 Mikrometer beträgt.

5. Zusammensetzung nach Anspruch 1, wobei die Konzentration von gesättigter organischer Säure, eines Salzes davon oder einer Mischung davon im Bereich von 0,5 bis 4% liegt.

6. Zusammensetzung nach Anspruch 1, worin die gesättigte Fettsäure Stearinsäure ist.

7. Zusammensetzung nach Anspruch 4, worin die gesättigte organische Säure Stearinsäure mit einer Konzentration von etwa 2 Gew.% bezogen auf das Gewicht des Füllstoffes ist.

8. Zusammensetzung nach Anspruch 1, worin der anorganische Füllstoff Calciumcarbonat ist.

9. Zusammensetzung nach Anspruch 1, worin die repetierenden Einheiten, die Oxyalkylen-Reste mit nachbarständigen Methylen-Einheiten aufweisen, repetierende Ethylenoxid-Einheiten sind.

10. Zusammensetzung nach Anspruch 1, worin das Polyacetal-Polymer ein Polyoxymethylen-Homopolymer ist.

11. Formartikel, aufweisend die Zusammensetzung nach Anspruch 1.

12. Verfahren zum Formen einer Zusammensetzung, umfassend die Schritte:

Vereinigen eines Polyacetal-Polymers, das Polyoxymethylen und bis zu 10 Mol.% repetierende Einheiten aufweist, die Oxyalkylen-Reste mit nachbarständigen Methylen-Einheiten aufweisen; mit einem mineralischen Füllstoff mit einem Höhe-Breite-Verhältnis von weniger als 5, wobei der mineralische Füllstoff einen mittleren äquivalenten Kugeldurchmesser im Bereich von 0,1 bis 3,5 Mikrometer hat; und einer gesättigten organischen Säure, eines Salzes davon oder einer Mischung davon mit einer Konzentration von mindestens etwa 0,5 Gew. % des mineralischen Füllstoffes, wobei die gesättigte organische Säure, das Salz davon oder eine Mischung davon gesättigte Fettsäuren, Salze davon oder eine Mischung davon aufweisen, und wobei der mineralische Füllstoff und das Polyacetal in einem Gewichtsverhältnis vereinigt werden, das durch die Formel vorgegeben ist:

$$Wf/Wp = [VF/(1-VF)] \times Df/Dp$$

worin Wf das Gewicht des Füllstoffes ist, Wp ist das Gewicht des Polymers, VF ist der gewünschte Volumenanteil des Füllstoffes im Bereich von 0,01 bis 0,3, Df ist die Dichte des Füllstoffes und Dp ist die Dichte des Polymers; Erhitzen der Zusammenstellung bis zu einer Temperatur oberhalb des Schmelzpunktes des Polyacetals, um eine schmelzflüssige Zusammensetzung zu erzeugen; Mischen der schmelzflüssigen Zusammensetzung, um eine homogene Schmelze bereitzustellen; und Kühlen der schmelzflüssigen Zusammensetzung.

13. Verfahren nach Anspruch 12, wobei VF im Bereich von 0,10 bis 0,20 liegt.

14. Verfahren nach Anspruch 12, wobei der mittlere äquivalente Kugeldurchmesser 0,5 bis 2 $\mu$m beträgt.

15. Verfahren nach Anspruch 14, wobei die gesättigte organische Säure Stearinsäure mit einer Konzentration von etwa 2 Gew.% bezogen auf das Gewicht des Füllstoffes ist.

16. Verfahren nach Anspruch 12, wobei die gesättigte Fettsäure Stearinsäure ist.

17. Verfahren nach Anspruch 12, wobei der anorganische Füllstoff Calciumcarbonat ist.

18. Verfahren nach Anspruch 12, wobei die Oxyalkylen-Reste aufweisenden repetierenden Einheiten, die nachbarständige Methylen-Einheiten haben, Ethylenoxid-Einheiten sind.

19. Verfahren nach Anspruch 12, wobei das Polyacetal-Polymer ein Polyoxymethylen-Homopolymer ist.

**Revendications**

1. Composition comprenant un polymère polyacétal comprenant du polyoxymétylène et jusqu'à 10% en moles d'unités répétitives comprenant des radicaux d'oxyalkylène possédant des unités de méthylène adjacentes, 1%-30% en volume d'une charge minérale possédant un rapport d'aspect égal ou inférieur à 5, la charge possédant un diamètre sphérique équivalent moyen dans le domaine de 0,1 à moins de 3,5 micromètres, et un acide organique saturé, son sel, ou un mélange de ceux-ci, à une concentration d'au moins 0,5% en poids de la charge minérale, dans laquelle l'acide organique saturé, son sel, ou un mélange de ceux-ci comprend un ou plusieurs acides gras saturés, leurs sels, ou un mélange de ceux-ci.

2. Composition selon la revendication 1 dans laquelle la composition comprend 5-20% en volume d'une charge minérale.

3. Composition selon la revendication 1 dans laquelle la composition comprend 10-20% en volume d'une charge minérale.

4. Composition selon la revendication 1 dans laquelle le diamètre sphérique équivalent moyen est de 0,5 à 2 micromètres.

5. Composition selon la revendication 1 dans laquelle la concentration de l'acide organique saturé, son sel, ou un mélange de ceux-ci est dans le domaine de 0,5-4%.

6. Composition selon la revendication 1 dans laquelle l'acide gras saturé est de l'acide stéarique.

7. Composition selon la revendication 4 dans laquelle l'acide organique saturé est de l'acide stéarique à une concentration d'environ 2% en poids par rapport au poids de la charge.

8. Composition selon la revendication 1 dans laquelle la charge inorganique est du carbonate de calcium.

9. Composition de la revendication 1 dans laquelle les unités répétitives comprenant des radicaux d'oxyalkylène possédant des unités de méthylène adjacentes sont des unités répétitives d'oxyde d'éthylène.

10. Composition de la revendication 1 dans laquelle le polymère polyacétal est un homopolymère de polyoxyméthylène.

11. Article formé comprenant la composition de la revendication 1.

12. Procédé pour former une composition, comprenant les étapes consistant à :

combiner un polymère polyacétal comprenant du polyoxymétylène et jusqu'à 10% en moles d'unités répétitives comprenant des radicaux d'oxyalkylène possédant des unités de méthylène adjacentes, avec une charge minérale possédant un rapport d'aspect inférieur à 5, la charge minérale possédant un diamètre sphérique équivalent moyen dans le domaine de 0,1 à 3,5 micromètres, et un acide organique saturé, son sel, ou un mélange de ceux-ci, à une concentration d'au moins environ 0,5% en poids de la charge minérale, dans lequel l'acide organique saturé, son sel, ou un mélange de ceux-ci comprend des acides gras saturés, leurs sels, ou un mélange de ceux-ci et la charge minérale et le polyacétal étant combiné selon un rapport en poids donné par la formule:

$$Wf/Wp = [VF/(1-VF)] = Df/Dp$$

où Wf est le poids de la charge, Wp est le poids du polymère, VF est la fraction volumique désirée de la charge, dans le domaine de 0,01-0,3, Df est la densité de la charge, et Dp est la densité du polymère;

chauffer la combinaison à une température au-dessus du point de fusion du polyacétal pour former une composition fondue;
mélanger la composition fondue pour obtenir une masse fondue homogène; et,
refroidir la composition fondue.

13. Procédé de la revendication 12 dans lequel VF est dans le domaine de 0,10-0,20.

14. Procédé de la revendication 12 dans lequel le diamètre sphérique équivalent moyen est de 0,5-2 micromètres.

15. Procédé de la revendication 14 dans lequel l'acide organique saturé est de l'acide stéarique à une concentration d'environ 2% en poids par rapport au poids de la charge.

16. Procédé de la revendication 12 dans lequel l'acide gras saturé est de l'acide stéarique.

17. Procédé de la revendication 12 dans lequel la charge inorganique est du carbonate de calcium.

18. Procédé de la revendication 12 dans lequel les unités répétitives comprenant des radicaux d'oxyalkylène possédant des unités de méthylène adjacentes sont des unités d'oxyde d'éthylène.

19. Procédé de la revendication 12 dans lequel le polymère polyacétal est un homopolymère de polyoxyméthylène.